Europäisches Patentamt

European Patent Office

Office européen des brevets

(11) Publication number: **0 104 286 B1**

# EUROPEAN PATENT SPECIFICATION

(45) Date of publication of patent specification: **18.12.91**  (51) Int. Cl.⁵: **B25B 1/20, B25B 1/10**

(21) Application number: **82305114.9**

(22) Date of filing: **28.09.82**

(54) Clamping devices.

(43) Date of publication of application:
**04.04.84 Bulletin 84/14**

(45) Publication of the grant of the patent:
**18.12.91 Bulletin 91/51**

(84) Designated Contracting States:
**AT BE CH DE FR GB IT LI LU NL SE**

(56) References cited:
**CH-A- 96 512**
**FR-A- 471 674**
**US-A- 4 083 547**
**US-A- 4 240 621**

(73) Proprietor: **Yang, Tai-Her**
**5-1 Tay Pyng St.**
**Shi Hwu Jenn Jang Huah Shiann(TW)**

(72) Inventor: **Yang, Tai-Her**
**5-1 Tay Pyng St.**
**Shi Hwu Jenn Jang Huah Shiann(TW)**

(74) Representative: **Arthur, Bryan Edward et al**
**Withers & Rogers 4 Dyer's Buildings Holborn**
**London EC1N 2JT(GB)**

EP 0 104 286 B1

## Description

This invention relates to clamping devices, such as manual benchvices, mechanical lathe vices, or hand vices, lathe chucks or robot hands.

In conventional vices, the clamping jaws are fixed and have ridges for gripping. In the case of work pieces having so irregular shape, the clamping jaws can only clamp a work piece at some places. As a result, the clamping is not firm and stable in use. Patent CH 96152, discloses, inter alia, various clamping arrangements employing a plurality of angularly movable members.

An object of the invention is to overcome this problem.

According to this invention, I propose a clamping device as claimed in claim 1.

The clamping mouth comprises two or more slidable jaws, and slidable clamp members. The clamping surface formed by the clamp members may be angularly varied to adapt to the surface of a work piece for the purpose of firmly clamping it. Also, on both sides of the vice mouth or on the base, an auxiliary stop piece may be provided to provide a larger contact surface for the work piece for further stabling effect. Moreover, the auxiliary stop piece may be moved mannually or by a motor or hydraulic or pneumatic means and it may also be furnished, on its contact surface with one or more ridges for gripping a work piece or one or more slidable clamp members.

Embodiment of this invention are described by way of example, with reference to the drawings, in which:-

Figure 1A is a perspective view of an embodiment of a vice of this invention, in which a slidable clamp member is furnished with an arcuate slot;

Figure 1B is a perspective view of an embodiment of a vice, in which the slidable clamp member is furnished with a stud on both the top and the bottom surfaces;

Figure 2 is a top view of an embodiment of a vice of this invention to be used for clamping a work piece having a triangular cross-section;

Figure 3 is a top view of an embodiment of a vice to be used for clamping a work piece having a skewed quadrilateral cross-section;

Figure 4 is a top view of an embodiment of a vice to be used for clamping a work piece having a circular cross-section;

Figure 5 is a sectional view of a second embodiment of a vice of this invention, in which the slidable clamp member and the semi-circular channel engate about an oblique coupling surface;

Figure 6A and 6B are top views of a fourth embodiment of vice of this invention, in which an auxiliary stop piece is provided on one side of the vice;

Figure 7 is a top view of fifth embodiment of vice of this invention, in which the vice mouth is formed by four jaws in a cruciform manner;

Figure 8 is a sectional view of a sixth embodiment of vice of this invention, in which a slidable clamp member is vertically located in the jaw;

Figure 9 shows a tenth embodiment of vice of this invention, in which a manual clamp is furnished with a slidable clamp member;

Figure 10 shows an eleventh embodiment of vice of this invention, in which a lathe chuck is furnished with a slidable clamp member;

Figure 11 shows a twelfth embodiment of vice of this invention, in which a robot hand is furnished with a slidable clamp member.

In a first embodiment of a vice, the vice mouth comprises a positioning jaw 1 and a slidable jaw 2 and the clamping surface of the vice is formed by slidable clamp members 3, 3', which are semi-circular in plan view, and have an arcuate through slot 32,32' respectively. They may be made of any convenient material, either hard or soft, and in any convenient shape. On the clamping surfaces 31,31' of the clamp members 3,3', a number of gripping ridges are furnished, and at the centre of the surfaces 31,31', a V-shaped groove 33 to aid gripping a contacting surface is furnished. On each of the positioning jaw 1 and the sliding jaw 2, a channel 12,22 of shape complementary to the clamp members is furnished to accommodate each of the slidable clamp members 3,3'.

Through holes 13, 23 are furnished extending from the top to the bottom of the jaw through the channel 12,22; these are for each housing a countersunk bolt 4 which also passes through the slots 32 of the slidable clamp members 3,3' for locating the same. The slidable clamp members 3,3' are swivellable in the semi-circular channels 12,22 to an optimum angular orientation. Further, if more than two slidable clamp members 3 are installed between the positioning jaw 1 and the slidable jaw 2, a curved portion 11,21 will be furnished between every two slidable clamp members 3.

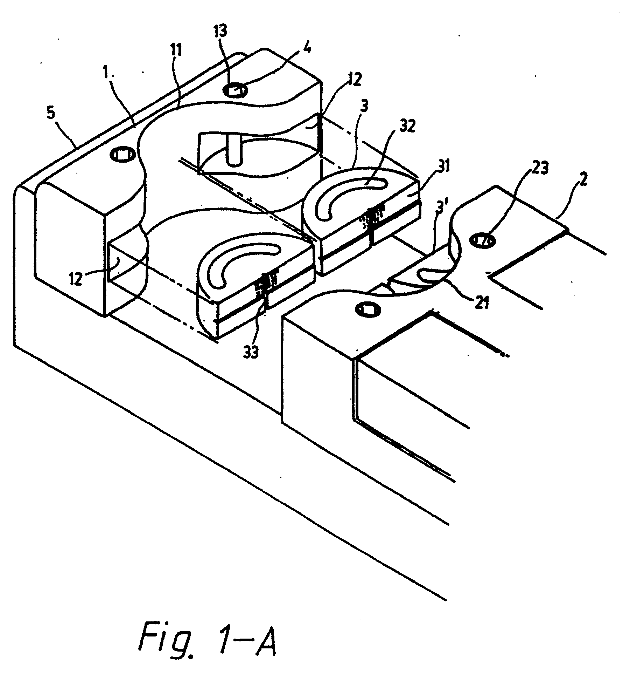

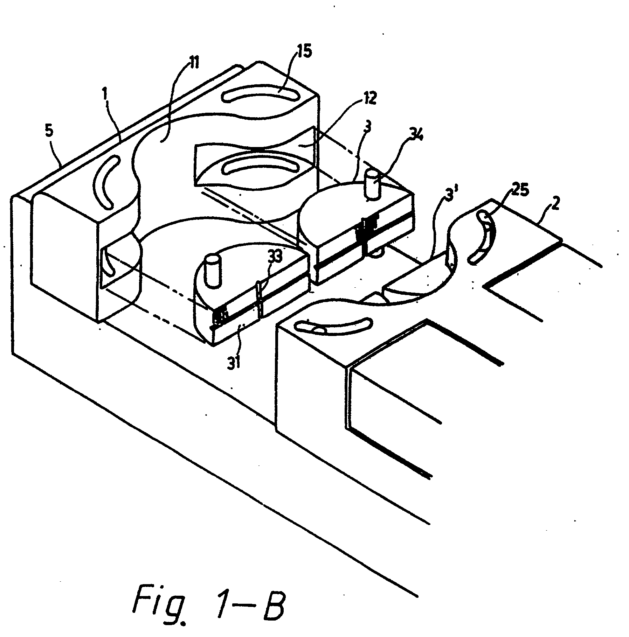

Alternatively, as shown in Figure 1B, on both the top and the bottom of each of the slidable clamp members 3,3', a peg 34,34' may be provided. At the top and the bottom of the semi-circular channels 12, 22 in the positioning jaw 1 and the slidable jaw 2, arcuate through slots 15,25 may be furnished so as to accommodate the pegs 34,34' on the slidable clamp members 3,3' and to allow the slidable clamp members 3,3' to be freely movable in the semi-circular channels 12,22 to an optimum position.

If an irregularly shaped work piece is put in either of the above described vice mouths and the positioning and the slidable jaws 1,2 are moved together so that the clamp members 3,3' grip the work piece, the clamp members will automatically adjust their angular orientation by using the semi-circular channels 12,22 as guides, so as to grip the work piece with their clamping surfaces 31,31' in the optimum stable firm position.

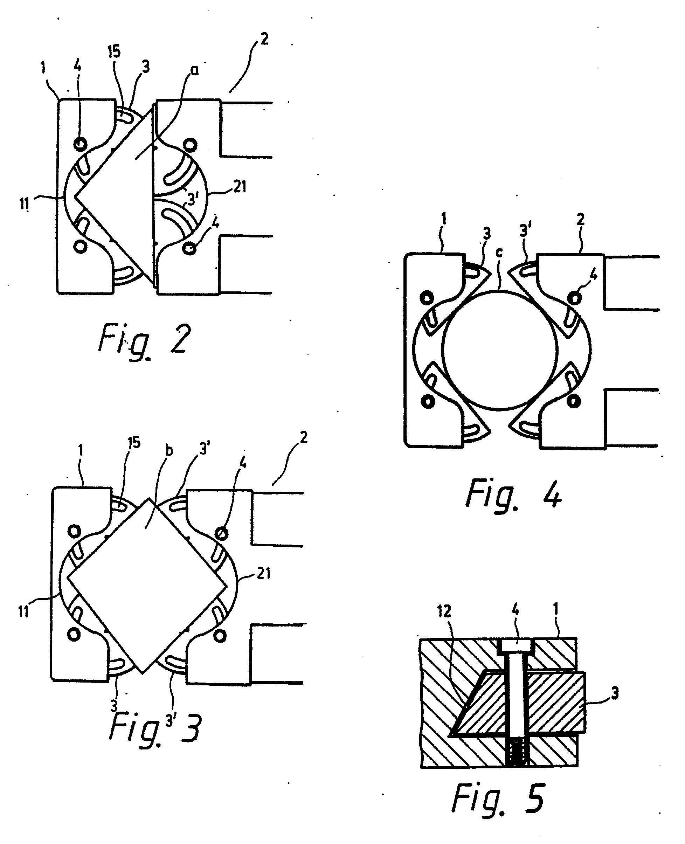

Figure 2 shows a vice according to this invention clamping a work piece (a) having a triangular cross-section. On the left-hand side of the vice mouth, the two slidable clamp members 3 on the positioning jaw 1 will automatically adjust to such an oblique angle as to have the clamping surfaces 31 firmly contacting two sides of the work piece, while the other clamping surface 31' of the two slidable clamp members 3' on the right-hand side of the vice will firmly contact the other side of the work piece (a). After slightly further tightening the vice mouth, the work piece (a) will be tightly clamped.

As shown in Figure 3, the vice may be used for clamping a work piece having a skewed quadrilateral cross-section. The slidable clamp members 3,3' of the positioning jaw 1 and the slidable jaw 2 will automatically adjust to fit the shape of the work piece (b). The firmness and stability is much better than in the conventional two -jawed vice, which can only clamp a work piece at two predetermined angles. Figure 4 shows an embodiment of the vice in which the clamping surface 31 of the slidable clamp member 3 is furnished with V-shaped grooves 33 for firmly holding a round work piece (c).

The number of slidable clamp members 3 to be installed on the positioning jaw 1 and the slidable jaw 2 may be varied depending upon the requirements. The number of slidable clamp member 3 to be installed on each of the two jaws need not be the same. Only one jaw need be employed with a slidable clamp member 3. The number of through holes 13,23 and the semi-circular channels 12,22 may also be varied depending upon the requirements.

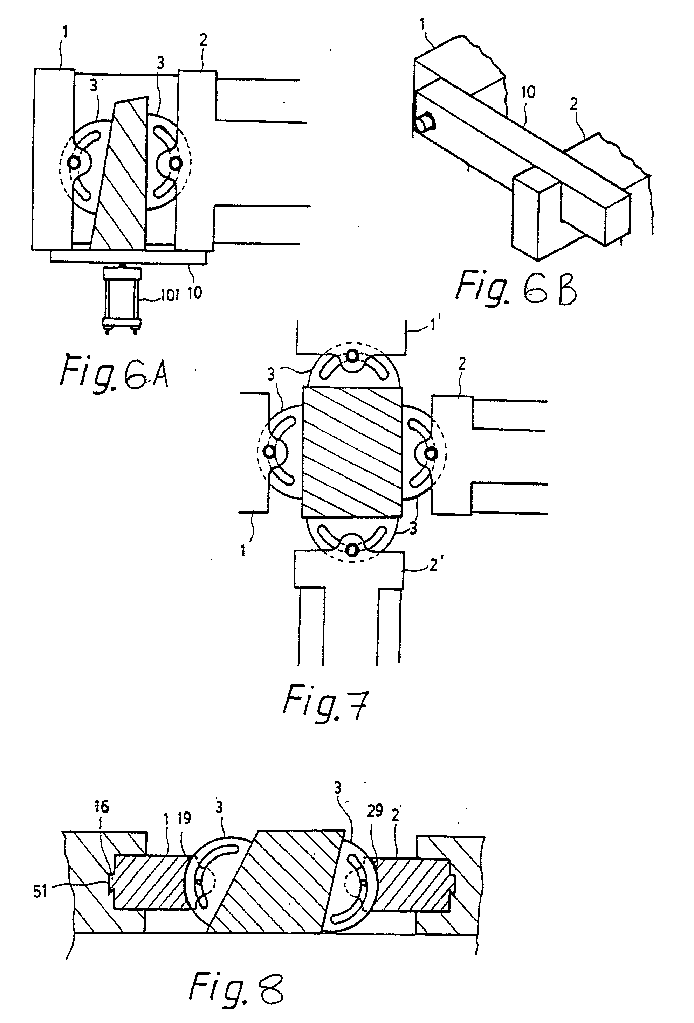

Figure 5 shows a second embodiment of the vice according to this invention, in which the slidable clamp members 3,3' and the semi-circular channels 12, 22 engage each other about an oblique contacting surface for a better engagement.

Figures 6A and 6B show a fourth embodiment of vice according to this invention. Perpendicular to the jaws on one or both sides of the vice mouth or on the base surface, an auxiliary stop 10 is furnished, and the surface of this which contacts the work piece is provided with gripping ridges or with one or more slidable clamp members 3. The auxiliary stop 10 may be securely attached to the positioning jaw 1, the slidable jaw 2 or the base 5, or it may be made integral with any of these.

The auxiliary stop 10 may be movable to and fro by hydraulic, pneumatic, electrical 101 or manual means. Upon the two jaws 1,2 being moved together for clamping a work piece, the auxiliary stop 10 may serve as an auxiliary supporting surface to make the clamping operation even more stable and firm, especially in clamping a work piece which has parallel or oblique surfaces.

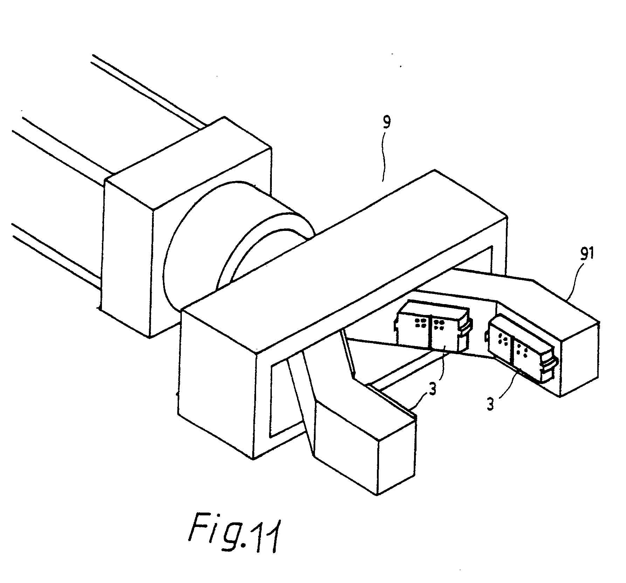

In addition to the aforesaid embodiments of vice that have the two jaws moving in the same direction, in a fifth embodiment the clamp according to this invention may have four jaws arranged in cruciform manner with two pairs of mutually confronting, spaced apart jaws. Each jaw as shown in Figure 9 can move back and forth. One or more jaws may be furnished with one or more slidable clamp members 3 so as to clamp work pieces.

The clamping faces of the slidable clamp members 3,3' of the jaws 1,2 may have any suitable shape such as in the sixth embodiment (shown in Figure 8), in which the jaws 1,2 have surfaces 19,20 which are semi-circular in cross-section and the clamp members are vertically disposed so as to be angularly movable in a vertical rather than a horizontal plane. Further the jaws 1,2 having the through bolt 6, the upstanding post 66 or the arcuate projection, which has a dovetail-shaped cross-section 16, on the back may be coupled with the arcuate channel, which has a dovetail-shaped cross-section, 51 on the base 5 so as to give a three-dimensional clamping function by means of the jaws 1,2 and the vertical slidable clamp members 3 being arranged at 90°,or other given angle(s), to the jaws.

The slidable clamp member may not only be used as a vice in the various kinds of well-known table vices e.g. the mechanical working bench vice, the adjustable base angle vice, and the work piece clamping block but also it may be used in a manual gripping member 7 such as that shown in Figure 9, in which a slidable clamp member 3 is furnished on both jaws 71 to form a clamping surface.

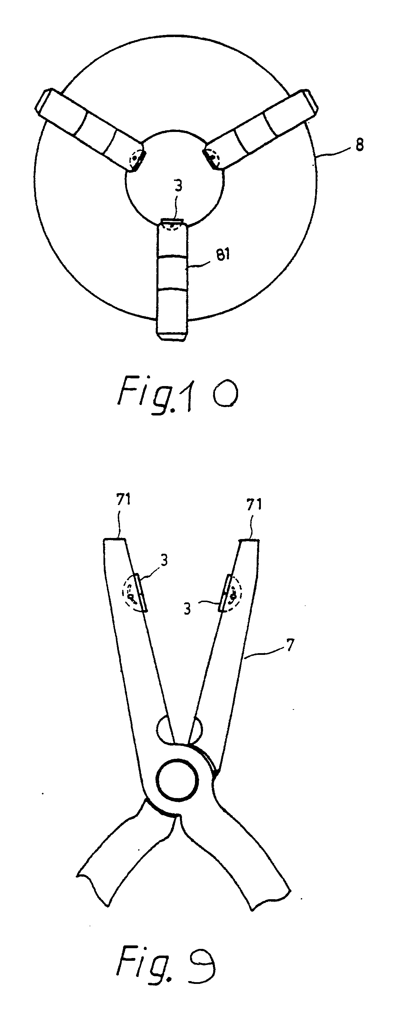

Figure 10 shows an embodiment of this invention, in which jaws 81 furnished with the slidable clamp members are attached to a lathe chuck 8. Figure 11 shows a further embodiment of this invention, in which a robot hand 9 is furnished with the slidable clamp members 3 on the two jaws 91 for firmly clamping an element having an irregular shape. It is therefore seen from the above embodiments that the clamp members according to this invention may be used in any clamping device to tightly clamp an object.

**Claims**

1. A clamping device comprising at least two jaws (1,2;71;91) relatively movable towards and away from one another and at least one clamping member (3) mounted on each jaw, each clamping member having a gripping portion (31) which defines a clamping surface for engaging an object (a,b,c) to be clamped in the device, and each clamping member being angularly movable, whereby, in use, each said clamping surface can freely adjust its orientation to conform to the object to be gripped, characterised in that the axis of rotation of each said clamping member lies in a fixed position relative to its respective jaw (1,2;71;91), the relative orientations of the jaws are fixed or are determined by the degree of separation of the jaws and each said clamping member axis lies in the plane of its respective clamping surface.

2. A clamping device as claimed in claim 1 wherein each jaw (1,2;71;91) carries two clamping members (3) which are independently angularly movable about their respective axes.

3. A clamping device according to claim 2 wherein one of said jaws (1,2;71;91) is movable laterally with respect to the direction of mutual approach and separation of the jaws.

4. A clamping device according to claim 3 wherein the laterally movable jaw (1) is provided with clamping means (53) for clamping it in a fixed lateral position.

5. A clamping device as claimed in claim 1 having three or four clamping members (3).

6. A clamping device as claimed in any preceding claim having stop means (4,34) for limiting the angular movement of each clamping member (3).

7. A clamping device according to any preceding claim, comprising a non-rotatable auxiliary stop member (10) for acting on a gripped object (a,b,c) at the clamping position.

8. A clamping device according to any preceding claim wherein each clamping member (3) is mounted in a recess (12) in a jaw (1,2;71;91) and each clamping member or the wall of said recess has accurate slot (15;32) and the other of each clamping member and the wall of the recess each have pin means (4;34) retained in said slot, whereby is mounted for said free angular movement.

9. A clamping device according to any preceding claim wherein a rear surface of each clamping member (3) and a cooperating surface of its jaw (1,2;71;91) each have complementary projections and channels (34,14).

10. A clamping device according to claim 9 wherein said projections and channels (34,14) are dovetail-shaped in cross-section.

**Revendications**

1. Dispositif de serrage comprenant au moins deux mâchoires (1,2 ; 71 ; 91) pouvant se déplacer en se rapprochant ou en s'écartant l'une de l'autre, et au moins un élément de serrage (3) monté sur chaque mâchoire, chaque élément de serrage présentant une partie de prise (3) qui définit une surface de serrage destinée à engager un objet (a, b, c) devant être serré dans le dispositif, et chaque élément de serrage pouvant être déplacé angulairement de sorte que, lors de l'utilisation, chaque dite surface de serrage peut ajuster librement son orientation afin de se conformer à l'objet à saisir, caractérisé en ce que l'axe de rotation de chaque dit élément de serrage se trouve dans une position fixe par rapport à sa mâchoire respective (1,2 ; 71 ; 91), les orientations relatives des mâchoires étant fixées ou déterminées par le degré de séparation des mâchoires et l'axe de chaque dit élément de serrage se trouvant dans le plan de sa surface de serrage respective.

2. Dispositif de serrage selon la revendication 1, dans lequel chaque mâchoire (1,2 ; 71; 91) porte deux éléments de serrage (3) qui, de façon indépendante, peuvent se déplacer angulairement autour de leurs axes respectifs.

3. Dispositif de serrage selon la revendication 2, dans quel l'une desdites mâchoires (1,2; 71 ; 91) peut être déplacée latéralement par rapport à la direction de rapprochement et d'éloignement mutuels des mâchoires.

4. Dispositif de serrage selon la revendication 3, dans lequel la mâchoire (1) pouvant être déplacée latéralement est munie de moyens de serrage (53) pour la serrer dans une position latérale fixe.

5. Dispositif de serrage selon la revendication 1, présentant trois ou quatre éléments de serrage (3).

6. Dispositif de serrage selon l'une quelconque des revendications précédentes, présentant des organes d'arrêt (4, 34) afin de limiter le mouvement angulaire de chaque élément de serrage (3).

7. Dispositif de serrage selon l'une quelconque des revendications précédentes, comprenant un organe d'arrêt auxiliaire non rotatif (10) destiné, dans la position de serrage, à agir sur un objet saisi (a, b, c).

8. Dispositif de serrage selon l'une quelconque des revendications précédentes, dans lequel chaque élément de serrage (3) est monté dans un évidement (12) d'une mâchoire (1,2 ; 71 ; 91), chaque élément de serrage ou la paroi de chaque évidement présentant une fente appropriée (15 ; 32) alors que l'autre de chaque élément de serrage et la paroi de l'évidement présentent chacun un moyen muni d'axe (4 ; 34) retenu dans ladite fente, en fournissant un montage qui permet ledit libre déplacement angulaire.

9. Dispositif de serrage selon l'une quelconque des revendications précédentes, dans lequel une surface arrière de chaque élément de serrage (3) et une surface coopérant avec celle-ci de sa mâchoire (1,2; 71 ; 91) présentent chacune des saillies et des rainures correspondantes (34 ; 14).

10. Dispositif de serrage selon la revendication 9 dans lequel lesdites saillies et rainures (34 ; 14) présentent en section transversale une forme en queue d'aronde.

**Patentansprüche**

1. Spannvorrichtung, bestehend aus mindestens zwei Backen (1, 2, 71, 91), die relativ zu und voneinander weg bewegbar sind und mindestens einem Spannelement (3), das auf jede Backe montiert ist, wobei jedes Spannelement ein Griffteil (31) aufweist, welches eine Spannfläche definiert, um in ein Objekt (a, b, c) einzugreifen, welches in der Vorrichtung eingespannt wird, wobei jedes Spannelement winkelig bewegbar ist und sich im Gebrauch frei ausrichten kann, um sich dem zu greifenden Objekt anzupassen, **dadurch gekennzeichnet, daß** die Rotationsachse eines jeden Spannelementes in einer festen Position relativ zu der betreffenden Backe liegt, die relative Ausrichtung der Backen durch den Grad der Trennung der Backen fest oder bestimmt ist und daß die Achse jedes Spannelementes in der Ebene der betreffenden Spannfläche liegt.

2. Spannvorrichtung nach Anspruch 1, **dadurch gekennzeichnet,** daß jede Backe (1, 2, 71, 91) zwei Spannelemente (3) trägt, die um ihre betreffenden Achsen unabhängig winkelig bewegbar sind.

3. Spannvorrichtung nach Anspruch 2, **dadurch gekennzeichnet,** daß eine der Backen (1, 2, 71, 91) in bezug auf die Richtung der gegenseitigen Annäherung und Trennung der Backen seitlich bewegbar ist.

4. Spannvorrichtung nach Anspruch 3, **dadurch gekennzeichnet,** daß die seitlich bewegbare Backe mit Spannmitteln (53) versehen ist, um sie in einer festen seitlichen Position einzuspannen.

5. Spannvorrichtung nach Anspruch 1, **dadurch gekennzeichnet,** daß sie drei oder vier Spannelemente (3) aufweist.

6. Spannvorrichtung nach einem der Ansprüche 1 bis 5, **dadurch gekennzeichnet,** daß sie Anschläge (4, 34) aufweist, um die Winkelbewegung eines jeden Spannelementes (3) zu begrenzen.

7. Spannvorrichtung nach einem der Ansprüche 1 bis 6, **dadurch gekennzeichnet,** daß die Vorrichtung ein nicht drehbares Hilfsanschlagelement (10) aufweist, um auf ein gegriffenes Objekt (a, b, c) in der eingespannten Position einzuwirken.

8. Spannvorrichtung nach einem der Ansprüche 1 bis 7, **dadurch gekennzeichnet,** daß jedes Spannelement (3) in einer Vertiefung (12) in einer Backe (1, 2, 71, 91) montiert ist und daß jedes Spannelement oder die Wand der Vertiefung einen bogenförmigen Schlitz (15, 32) aufweist und jedes übrige Spannelement und die Wand der Vertiefung Stifte (4, 34) aufweisen, die in dem Schlitz festgehalten werden, um die freie Winkelbewegung zu ermöglichen.

9. Spannvorrichtung nach einem der Ansprüche 1 bis 8, **dadurch gekennzeichnet,** daß die Rückenflächen eines jeden Spannelementes (3) und die zugehörige Fläche ihrer Backen (1, 2, 71, 91) jeweils zueinander komplementäre Vorsprünge und Kanäle (34, 14) haben.

10. Spannvorrichtung nach Anspruch 9, **dadurch gekennzeichnet,** daß die Vorsprünge und Kanäle (34, 14) eine schwalbenschwanzförmige Querschnittsform haben.

Fig. 1-A

Fig. 1-B

Fig. 2

Fig. 3

Fig. 4

Fig. 5

Fig. 6 A

Fig. 6 B

Fig. 7

Fig. 8

Fig.11

Fig.1 O

Fig. 9